# EUROPEAN PATENT APPLICATION

(11) **EP 2 369 457 A1**
(43) Date of publication of application: **28.09.2011**
(21) Application number: 09834288.4
(22) Date of filing: 11.11.2009
(51) Int. Cl.: G06F 3/048, G06F 3/041, H04M 1/00

(54) **MOBILE TERMINAL DEVICE, METHOD OF OPERATION NOTIFICATION, AND PROGRAM OF OPERATION NOTIFICATION**

(30) Priority: 22.12.2008 JP 2008325189
(71) Applicant: NEC Corporation, Minato-ku Tokyo 108-8001 (JP)
(72) Inventor: AOIKE, Toru, Kodama-gun Saitama 367-0297 (JP)
(74) Representative: Glawe, Delfs, Moll
(86) International application number: PCT/JP2009/006004
(87) International publication number: WO 2010/073472

(57) **Abstract**

A mobile terminal device includes: input sensing means for outputting an operation signal when sensing an operation on an input device; operation determining means for determining that a long-period operation is performed in the case where a period for which the input sensing means outputs the operation signal is not less than a predetermined period, and determining that a short-period operation is performed in the case where the period for which the input sensing means outputs the operation signal is less than the predetermined period; and user notifying means for performing notification in a different mode by changing an operating mode of notifying means, depending on whether the operation determining means determines that the long-period operation is performed or determines that the short-period operation is performed.

## Description

### Technical Field

The present invention relates to a mobile terminal device having an input function by a long-press operation, a method of operation notification, and a program of operation notification.

### Background Art

Nowadays, there is a mobile phone terminal including, as an input device, a touch panel or a touch sensor that allows a user to perform input just by touching without depressing. The use of such a touch panel or touch sensor improves key input efficiency, thereby enhancing usability. There is also a mobile phone terminal including a vibrating device such as a vibrator which uses a piezoelectric element or a motor, and having a function of, when an operation is performed, vibrating the vibrating device so that a user recognizes that the operation is performed.

A mobile terminal device that includes not only a typical operation key but also a shift key to improve key input efficiency is described in PTL 1. A user of the mobile terminal device described in PTL 1 long-presses or short-presses the shift key while pressing the typical operation key. A mobile information device described in PTL 2 changes a vibrating pattern of a vibrator according to a position at which a touch operation is performed on a touch panel.

### Citation List

### Patent Literature

PTL 1: Japanese Patent Application Laid-Open No. 2003-333157 (paragraphs 0011 to 0015, and 0022)
PTL 2: Japanese Patent Application Laid-Open No. 2007-115157 (paragraphs 0033 to 0036, and 0045 to 0046)

### Summary of Invention

### Technical Problem

In the mobile terminal device described in PTL 1, however, it is difficult for the user to know whether the operation performed by the user on the shift key is accepted by the mobile terminal device as the long-press operation or the short-press operation. There is even a possibility of decreased key input efficiency in the case where the user is unaware that he/she has mistakenly performed the long-press operation instead of the short-press operation and vice versa.

The mobile information device described in PTL 2 exercises vibration control according to the touch operation, with the aim of making the user recognize the local position of the touch operation on the touch panel based on a difference in vibrating mode (a difference in key click feeling). The invention described in PTL 2, however, is not intended to make the user recognize the type of the touch operation (long-press operation/short-press operation).

In view of this, an exemplary object of the present invention is to provide a mobile terminal device, a method of operation notification, and a program of operation notification that enable a user to easily recognize whether an operation performed by the user on an input device is accepted as a long-press operation or a short-press operation.

In this description, in the case of an input device such as a touch panel or a touch sensor that can be operated just by touching, an operation of touching the input device with a finger or the like for not less than a predetermined period is referred to as the long-press operation, and an operation of touching the input device with a finger or the like for less than the predetermined period is referred to as the short-press operation.

### Solution to Problem

A mobile terminal device according to the present invention includes: input sensing means for outputting an operation signal when sensing an operation on an input device; operation determining means for determining that a long-period operation is performed in the case where a period for which the input sensing means outputs the operation signal is not less than a predetermined period, and determining that a short-period operation is performed in the case where the period for which the input sensing means outputs the operation signal is less than the predetermined period; and user notifying means for performing notification in a different mode by changing an operating mode of notifying means, depending on whether the operation determining means determines that the long-period operation is performed or determines that the short-period operation is performed.

A method of operation notification according to the present invention includes: outputting an operation signal when sensing an operation on an input device; determining that a long-period operation is performed in the case where a period for which the operation signal is output is not less than a predetermined period, and determining that a short-period operation is performed in the case where the period for which the operation signal is output is less than the predetermined period; and performing notification in a different mode by changing an operating mode of notifying means, depending on whether determining that the long-period operation is performed or determining that the short-period operation is performed.

A program of operation notification according to the present invention causes a computer included in a mobile terminal device to execute: a process of outputting an operation signal when sensing an operation on an input device; a process of determining that a long-period operation is performed in the case where a period for which the operation signal is output is not less than a predetermined period, and determining that a short-period operation is performed in the case where the period for which the operation signal is output is less than the predetermined period; and a process of performing notification in a different mode by changing an operating mode of notifying means, depending on whether determining that the long-period operation is performed or determining that the short-period operation is performed.

### Advantageous Effects of Invention

According to the present invention, the user can easily recognize whether the operation performed by the user on the input device is accepted as the long-press operation or the short-press operation.

### Brief Description of Drawings

[fig. 1] It depicts a block diagram showing a circuit structure of a first exemplary embodiment (exemplary embodiment 1) of a mobile terminal device according to the present invention.
[fig. 2] It depicts a front view of the mobile terminal device shown in Fig. 1.
[fig. 3] It depicts a flowchart showing a process according to an operation on an input device.
[fig. 4] It depicts a block diagram showing a circuit structure of a second exemplary embodiment (exemplary embodiment 2) of the mobile terminal device according to the present invention.
[fig. 5] It depicts a block diagram showing a principal part of the mobile terminal device according to the present invention.

### Description of Embodiment

### Exemplary Embodiment 1

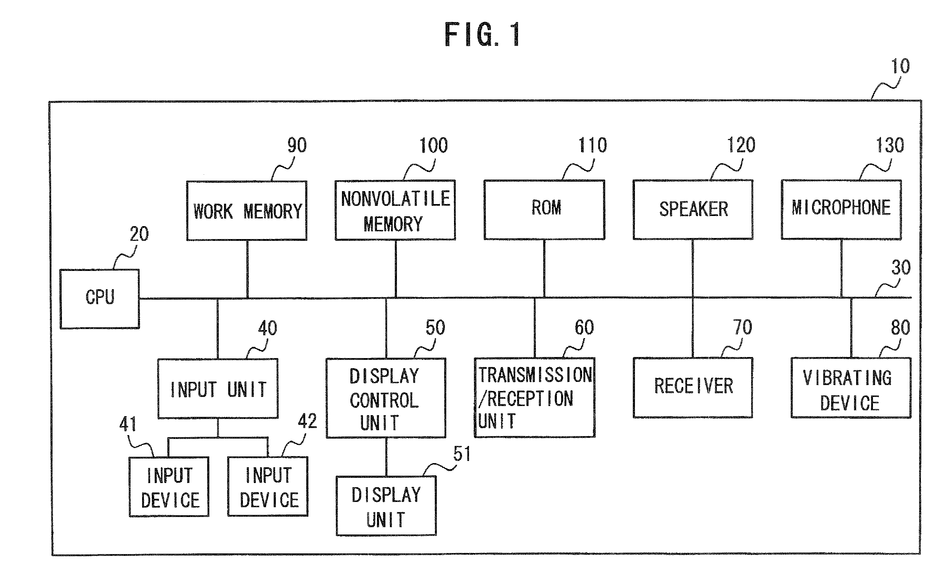

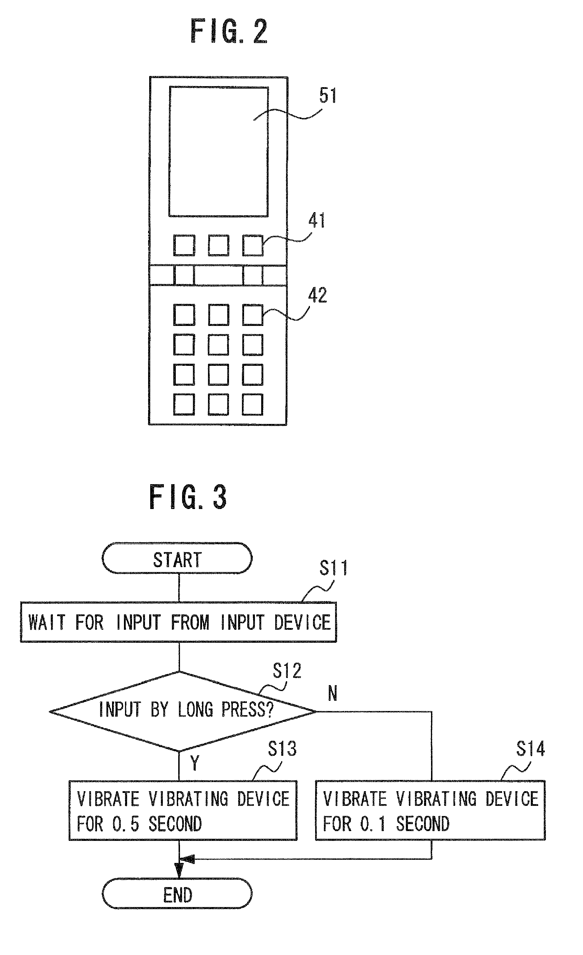

Fig. 1 is a block diagram showing a circuit structure of a first exemplary embodiment (exemplary embodiment 1) of a mobile terminal device according to the present invention. Fig. 2 is a front view of the mobile terminal device shown in Fig. 1. A mobile phone as an example of the mobile terminal device is shown in Fig. 2. A structure of a mobile phone 10 is described below with reference to Figs. 1 and 2.

The mobile phone 10 includes a CPU (Central Processing Unit) 20. The CPU 20 is a device for controlling components of the mobile phone 10. The CPU 20 is connected with an input unit 40, a display control unit 50, a transmission/reception unit 60, a receiver 70, a vibrating device 80, a work memory 90, a nonvolatile memory 100, a ROM 110, a speaker 120, and a microphone 130, via a bus 30. The input unit 40 is connected with an input device 41 and an input device 42, and the display control unit 50 is connected with a display unit 51.

The input unit 40 is a circuit for sensing an operation on each of the input devices 41 and 42 and outputting an operation signal. The input device 41 is located on the front of the mobile phone 10, as shown in Fig. 2. The input device 41 may instead be located on the display unit 51. The input device 41 is a touch panel or a touch sensor that can be operated by the user just by touching. The input device 42 is located on the front of the mobile phone 10, as shown in Fig. 2. The input device 42 is a button that can be operated by the user by depressing.

The display control unit 50 is a control circuit for controlling display of the display unit 51. The display unit 51 is located on the front of the mobile phone 10, as shown in Fig. 2. The display unit 51 is a display device for performing black and white display or color display, such as a liquid crystal panel or an organic EL device.

The transmission/reception unit 60 is a circuit for performing call transmission/reception, e-mail transmission/reception, and the like via a wireless line. The receiver 70 is a device for outputting the other party's voice during a call. The vibrating device 80 is a device capable of vibrating, such as a vibrator which uses a piezoelectric element or a motor. The vibrating device 80 vibrates according to control by the CPU 20, for example when receiving a call, when receiving an e-mail message, or when operating the input device 41.

The work memory 90 is a RAM for temporarily storing data that is used by the CPU 20 when executing a program. The nonvolatile memory 100 is a memory on which data can be freely written and erased, and is a semiconductor memory that can retain stored data even when not supplied with power. The nonvolatile memory 100 stores user data such as phonebook data, various settings, and transmitted/received mail. The ROM 110 is a memory for storing fixed data such as various control programs executed by the CPU 20.

The speaker 120 is a device for outputting a ring tone, a voice, a confirmation tone, and so on. The microphone 130 is a device for transmitting a voice during a call.

The following describes a process of making the user recognize whether an operation is determined as the long-press operation or the short-press operation. Fig. 3 is a flowchart showing the process of making the user recognize whether an operation is determined as the long-press operation or the short-press operation. Note that the mobile terminal device of this exemplary embodiment determines the long-press operation performed by the user on the input device 41 and the short-press operation performed by the user on the input device 41, as different operations.

The CPU 20 waits for an operation on the input device 41 (step S11). Upon sensing the operation on the input device 41 according to an operation signal from the input unit 40, the CPU 20 determines whether or not the operation on the input device 41 is the long-press operation (step S12). For example, the CPU 20 determines the operation on the input device 41 as the long-press operation, in the case where an output period of the operation signal which is output when sensing the operation is not less than 1.0 second. In detail, the CPU 20 starts a timer upon sensing that the output of the operation signal starts, and determines that the long-press operation is performed in the case where the timer indicates a value equivalent to not less than 1.0 second when the operation signal is stopped.

In the case of determining the operation on the input device 41 as the long-press operation in step S12, the CPU 20 vibrates the vibrating device 80 for a predetermined long time (for example, 0.5 second) (step S13). In the case where the input unit 40 determines the operation on the input device 41 not as the long-press operation (i.e. determines the operation as the short-press operation) in step S12, the CPU 20 vibrates the vibrating device 80 for a predetermined short time (for example, 0.1 second) (step S14).

Note that the period used as a threshold for distinguishing between the long-press operation and the short-press operation may be a period other than the above. Moreover, each vibrating time of the vibrating device 80 may be a vibrating time other than the above, so long as there is a time difference sufficient for the user to determine whether the long-press operation or the short-press operation is accepted by the mobile phone 10. Furthermore, the period as the threshold and each vibrating time may be set by the user.

In such a mobile terminal device, the time for vibrating the vibrating device when sensing the operation on the input device which is a touch panel or a touch sensor is changed depending on whether the operation is the long-press operation or the short-press operation. Hence, the user can easily recognize whether the operation performed by the user on the input device is accepted as the long-press operation or the short-press operation.

The CPU 20 may perform control of changing a vibrating pattern of the vibrating device 80 depending on whether the operation on the input device 41 is determined as the long-press operation or the short-press operation. For example, the vibrating pattern is a manner in which a vibrating level changes in a predetermined period. The manner in which the vibrating level changes includes the case where the vibrating level is unchanged (i.e., the vibrating level is constant). The CPU 20 may also combine the control of changing the vibrating time and the control of changing the vibrating pattern.

### Exemplary Embodiment 2

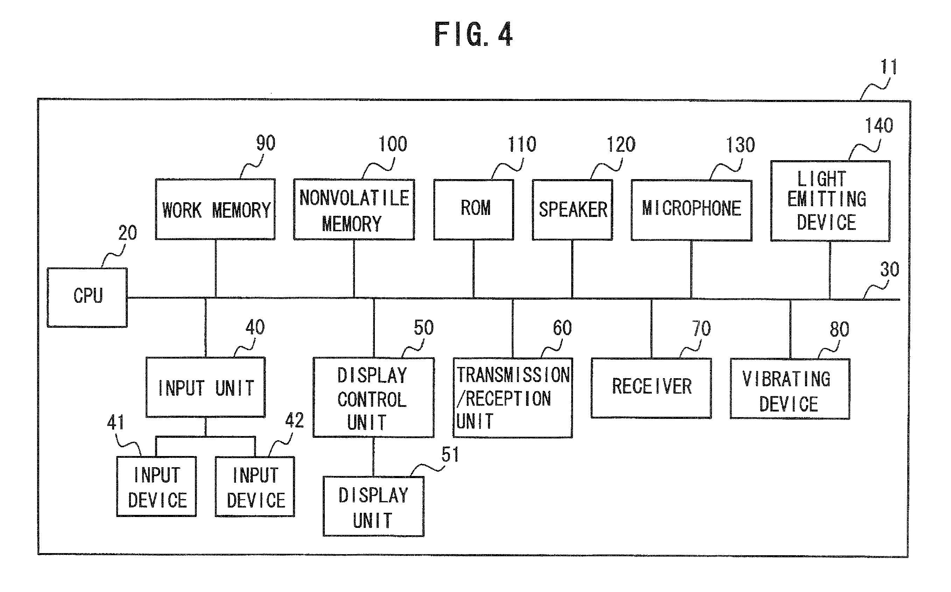

Fig. 4 is a block diagram showing a circuit structure of a second exemplary embodiment (exemplary embodiment 2) of the mobile terminal device according to the present invention. A structure of a mobile phone 11 as the mobile terminal device of the second exemplary embodiment is described below with reference to Fig. 4. The mobile phone 11 has a structure in which a light emitting device 140 is added to the structure of the mobile phone 10 of the first exemplary embodiment shown in Fig. 1.

The light emitting device 140 is a light emitting device such as a light emitting diode or an organic EL device. The light emitting device 140 changes a light emitting time or a light emitting color, according to control by the CPU 20.

In the mobile phone 10 of the first exemplary embodiment, the vibrating device 80 is vibrated for the vibrating time corresponding to the type of the operation (long-press operation/short-press operation) on the input device 41. In the mobile phone 11 of the second exemplary embodiment, on the other hand, a manner in which the light emitting device 140 emits light is changed depending on whether the long-press operation or the short-press operation is performed.

For example, the CPU 20 determines the operation on the input device 41 as the long-press operation, in the case where the output period of the operation signal from the input device 41 is not less than 1.0 second. The CPU 20 determines the operation on the input device 41 as the short-press operation, in the case where the output period of the operation signal is less than 1.0 second. In the case where the input unit 40 determines the operation on the input device 41 as the long-press operation, the CPU 20 controls the light emitting device 140 to emit light for a predetermined long time (for example, 0.5 second). In the case of determining the operation on the input device 41 as the short-press operation, the CPU 20 controls the light emitting device 140 to emit light for a predetermined short time (for example, 0.1 second).

Note that the period used as a threshold for distinguishing between the long-press operation and the short-press operation may be a period other than the above. Moreover, each light emitting time of the light emitting device 140 may be a light emitting time other than the above, so long as there is a time difference sufficient for the user to determine whether the long-press operation or the short-press operation is accepted by the mobile phone 10. Furthermore, the period as the threshold and each light emitting time may be set by the user.

The CPU 20 may change the light emitting color instead of the light emitting time of the light emitting device 140. For example, the CPU 20 controls the light emitting device 140 to emit yellow light when accepting the long-press operation on the input device 41, and controls the light emitting device 140 to emit blue light when accepting the short-press operation on the input device 41. The CPU 20 may also perform such control that combines the light emitting time and the light emitting color.

In the mobile terminal device of the second exemplary embodiment, the pattern in which the light emitting device emits light when sensing the operation on the input device which is a touch panel or a touch sensor is changed depending on whether the operation is the long-press operation or the short-press operation. Hence, the user can visually recognize whether the operation performed by the user on the input device is accepted as the long-press operation or the short-press operation.

The CPU 20 in the mobile phone 11 may execute both the control of the vibrating device 80 in the first exemplary embodiment and the control of the light emitting device 140 in the second exemplary embodiment, according to the input made from the input device 41 by the long-press operation or the short-press operation. Such a mobile terminal device enables tactile and visual recognition by the user, when sensing the operation on the input device which is a touch panel or a touch sensor. Hence, the user can more easily recognize whether the operation performed by the user on the input device is accepted as the long-press operation or the short-press operation.

The first and second exemplary embodiments describe the case where, in the mobile terminal device, the long-press operation or the short-press operation is performed as the operation on the input device 41 which is a device such as a touch panel or a touch sensor that allows an input operation just by touching. Regarding the long-press operation or the short-press operation on a depression-sensitive button such as the input device 42 shown in Fig. 1, too, whether the long-press operation or the short-press operation is accepted may be notified to the user using the vibrating device or the light emitting device, in the same way as in the first and second exemplary embodiments.

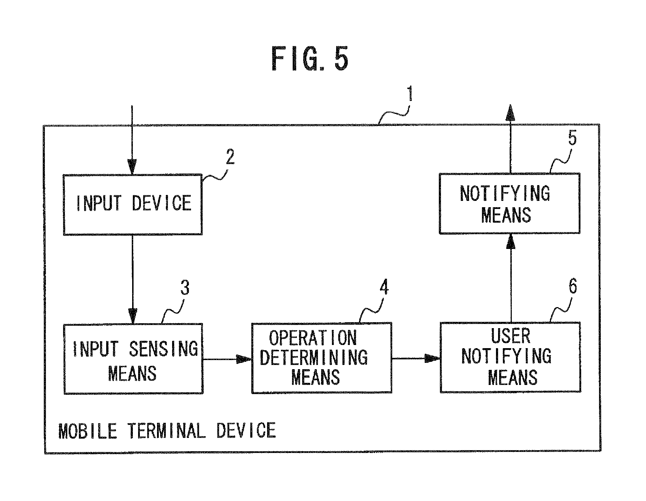

Fig. 5 is a block diagram showing a principal part of the mobile terminal device according to the present invention. As shown in Fig. 5, a mobile terminal device 1 (for example, corresponding to the mobile phone 10 shown in Fig. 1) includes: input sensing means 3 (for example, corresponding to the input unit 40 shown in Fig. 1) for outputting an operation signal when sensing an operation on an input device 2 (for example, corresponding to the input device 41 shown in Fig. 1); operation determining means 4 (for example, corresponding to the CPU 20 shown in Fig. 1) for determining that a long-period operation (for example, the long-press operation) is performed in the case where a period for which the input sensing means 3 outputs the operation signal is not less than a predetermined period, and determining that a short-period operation (for example, the short-press operation) is performed in the case where the period for which the input sensing means 3 outputs the operation signal is less than the predetermined period; and user notifying means 6 (for example, corresponding to the CPU 20 shown in Fig. 1) for performing notification in a different mode by changing an operating mode (for example, an operating time or an operating pattern) of notifying means (for example, corresponding to the vibrating device 80 shown in Fig. 1 or the light emitting device 140 shown in Fig. 4), depending on whether the operation determining means 4 determines that the long-period operation is performed or determines that the short-period operation is performed. Such a mobile terminal device enables the user to recognize that the operation performed by the user on the input device is accepted as the long-press operation. This reduces the number of instances where the user misses an operation error, so that key input efficiency can be improved.

The mobile terminal device of each of the above exemplary embodiments also includes the mobile terminal device as defined in the following (1) to (5).

(1) The mobile terminal device wherein the notifying means is a vibrating device, and the user notifying means changes a vibrating time of the vibrating device, depending on whether the operation determining means determines that the long-period operation is performed or determines that the short-period operation is performed (for example, realized by the process of step S13 or S14). The mobile terminal device of such a structure enables the user to tactilely recognize easily whether the operation performed on the input device is accepted as the long-press operation or the short-press operation.

(2) The mobile terminal device wherein the notifying means is a vibrating device, and the user notifying means changes a vibrating mode (for example, a vibrating pattern) of the vibrating device, depending on whether the operation determining means determines that the long-period operation is performed or determines that the short-period operation is performed (for example, realized by the process described with regard to the control of changing the vibrating pattern in the first exemplary embodiment). The mobile terminal device of such a structure enables the user to tactilely recognize easily whether the operation performed on the input device is accepted as the long-press operation or the short-press operation.

(3) The mobile terminal device wherein the notifying means is a light emitting device, and the user notifying means changes a light emitting time of the light emitting device, depending on whether the operation determining means determines that the long-period operation is performed or determines that the short-period operation is performed. The mobile terminal device of such a structure enables the user to visually recognize whether the operation performed on the input device is accepted as the long-press operation or the short-press operation.

(4) The mobile terminal device wherein the notifying means is a light emitting device, and the user notifying means changes a light emitting mode (for example, a light emitting color) of the light emitting device, depending on whether the operation determining means determines that the long-period operation is performed or determines that the short-period operation is performed. The mobile terminal device of such a structure enables the user to visually recognize whether the operation performed on the input device is accepted as the long-press operation or the short-press operation.

(5) The mobile terminal device wherein the input device is a touch panel or a touch sensor (for example, corresponding to the input device 41 shown in Fig. 2). The mobile terminal device of such a structure enables the user to recognize the long-press operation on the touch-sensitive input device which contributes to improved key input efficiency. This reduces the number of instances where the user misses an operation error, so that key input efficiency can be improved.

While the present invention has been described with reference to the above exemplary embodiments and examples, the present invention is not limited to the above exemplary embodiments and examples. Various changes understandable by those skilled in the art within the scope of the present invention can be made to the structures and details of the present invention.

This application claims priority based on Japanese Patent Application No. 2008-325189 filed on December 22, 2008, the disclosure of which is incorporated herein in its entirety.

### Industrial Applicability

The present invention is applicable to a mobile communication terminal device such as a mobile phone, a PHS (Personal Handy phone System), and a PDA (Personal Digital Assistant).

### Reference Signs List

- 1: mobile terminal device
- 2: input device
- 3: input sensing means
- 4: operation determining means
- 5: notifying means
- 6: user notifying means
- 10, 11: mobile phone
- 20: CPU
- 30: bus
- 40: input unit
- 41,: 42 input device
- 50: display control unit
- 51: display unit
- 60: transmission/reception unit
- 70: receiver
- 80: vibrating device
- 90: work memory
- 100: nonvolatile memory
- 110: ROM
- 120: speaker
- 130: microphone
- 140: light emitting device

## Claims

1. A mobile terminal device comprising:
input sensing means for outputting an operation signal when sensing an operation on an input device;
operation determining means for determining that a long-period operation is performed in the case where a period for which the input sensing means outputs the operation signal is not less than a predetermined period, and determining that a short-period operation is performed in the case where the period for which the input sensing means outputs the operation signal is less than the predetermined period; and
user notifying means for performing notification in a different mode by changing an operating mode of notifying means, depending on whether the operation determining means determines that the long-period operation is performed or determines that the short-period operation is performed.

2. The mobile terminal device according to claim 1, wherein the notifying means is a vibrating device, and
the user notifying means changes a vibrating time of the vibrating device, depending on whether the operation determining means determines that the long-period operation is performed or determines that the short-period operation is performed.

3. The mobile terminal device according to claim 1 or 2, wherein the notifying means is a vibrating device, and
the user notifying means changes a vibrating mode of the vibrating device, depending on whether the operation determining means determines that the long-period operation is performed or determines that the short-period operation is performed.

4. The mobile terminal device according to any one of claims 1 to 3, wherein the notifying means is a light emitting device, and
the user notifying means changes a light emitting time of the light emitting device, depending on whether the operation determining means determines that the long-period operation is performed or determines that the short-period operation is performed.

5. The mobile terminal device according to any one of claims 1 to 4, wherein the notifying means is a light emitting device, and
the user notifying means changes a light emitting mode of the light emitting device, depending on whether the operation determining means determines that the long-period operation is performed or determines that the short-period operation is performed.

6. The mobile terminal device according to any one of claims 1 to 5, wherein the input device is a touch panel or a touch sensor.

7. A method of operation notification comprising:
outputting an operation signal when sensing an operation on an input device;
determining that a long-period operation is performed in the case where a period for which the operation signal is output is not less than a predetermined period, and determining that a short-period operation is performed in the case where the period for which the operation signal is output is less than the predetermined period; and
performing notification in a different mode by changing an operating mode of notifying means, depending on whether determining that the long-period operation is performed or determining that the short-period operation is performed.

8. The method of operation notification according to claim 7, comprising
changing a vibrating time of a vibrating device as the notifying means, depending on whether determining that the long-period operation is performed or determining that the short-period operation is performed.

9. A program of operation notification for causing a computer included in a mobile terminal device to execute:
a process of outputting an operation signal when sensing an operation on an input device;
a process of determining that a long-period operation is performed in the case where a period for which the operation signal is output is not less than a predetermined period, and determining that a short-period operation is performed in the case where the period for which the operation signal is output is less than the predetermined period; and
a process of changing an operating mode of notifying means, depending on whether determining that the long-period operation is performed or determining that the short-period operation is performed.

10. The program of operation notification according to claim 9, causing the computer to execute a process of performing notification by changing a vibrating time of a vibrating device as the notifying means, depending on whether determining that the long-period operation is performed or determining that the short-period operation is performed.
